# EUROPÄISCHE PATENTANMELDUNG

(11) **EP 2 110 581 A2**
(43) Veröffentlichungstag der Anmeldung: **21.10.2009**
(21) Anmeldenummer: 09154827.1
(22) Anmeldetag: 11.03.2009
(51) Int. Cl.: F16H 37/04, F16H 61/70

(54) **Mehrgruppengetriebe eines Kraftfahrzeuges**

(30) Priorität: 16.04.2008 DE 102008001201
(71) Anmelder: ZF Friedrichshafen AG, 88038 Friedrichshafen (DE)
(72) Erfinder: Dittrich, Alan, 78464 Konstanz (DE); Hoffmann, Rayk, 88048 Friedrichshafen (DE)

(57) **Zusammenfassung**

Die Erfindung betrifft ein Mehrgruppengetriebe eines Kraftfahrzeuges, mit wenigstens zwei in einem Antriebsstrang angeordneten Getriebegruppen (2, 3), bei dem Mittel zum Schalten eines Zwischenganges zur Verringerung oder Vermeidung von Zugkraftunterbrechungen bei Gangwechseln vorgesehen sind. Um zugkraftunterbrechungsfreie Gangwechsel mit einem variabel wählbaren Zwischengang sowie einen effektiven und möglichst verschleißarmen Betrieb zu ermöglichen, ist zwischen einer ersten Getriebegruppe (2) und einer zweiten Getriebegruppe (3) ein Planetengetriebe (41) angeordnet, wobei über das Planetengetriebe (41) eine Getriebeeingangswelle (17) mit einer Getriebehauptwelle (30) wirkverbindbar ist. Bei einem Verfahren zum Betrieb des Mehrgruppengetriebes wird zum Schalten eines Zwischenganges mit Hilfe eines über zugehörige Kupplungen (46, 47) zuschaltbaren Planetengetriebes (41) eine Wirkverbindung zwischen einer Getriebeeingangswelle (17) und einer Getriebehauptwelle (30) hergestellt, so dass wenigstens eine Hauptgruppe (3) bei zumindest teilweise geschlossenem, zwischen einem Antriebsmotor und der Getriebeeingangswelle (17) angeordneten Anfahrelement (7) lastfrei wird, ein eingelegter Ursprungsgang ausgelegt wird, die Drehzahl des Antriebsmotors im Schlupfbetrieb wenigstens einer der Kupplungen (46, 47) des Planetengetriebes (41) auf eine Anschlussdrehzahl eines Zielganges synchronisiert wird und bei Erreichen der Anschlussdrehzahl ein Zielgang eingelegt sowie das Planetengetriebe (41) wieder deaktiviert wird.

## Beschreibung

Die Erfindung betrifft ein Mehrgruppengetriebe eines Kraftfahrzeuges und ein Verfahren zum Betrieb eines Mehrgruppengetriebes eines Kraftfahrzeuges gemäß dem Oberbegriff des Patentanspruchs 1 und dem Oberbegriff des Patentanspruchs 8.

Mehrgruppengetriebe bestehen aus zwei oder mehr meist seriell angeordneten Getriebegruppen, durch deren Kombination eine hohe Gangzahl realisierbar ist. Zunehmend werden diese als automatisierte Schaltgetriebe, beispielsweise bestehend aus einer Eingangsgruppe, einer Hauptgruppe und einer Nachschaltgruppe, konzipiert. Derartige Getriebe finden insbesondere in Nutzfahrzeugen Anwendung, da sie eine besonders feine Gangabstufung mit beispielsweise 12 oder 16 Gängen bieten und einen hohen Wirkungsgrad aufweisen. Bei einer geringeren Gangzahl sind auch Konfigurationen lediglich aus einer Hauptgruppe und einer Eingangsgruppe oder einer Hauptgruppe und einer Nachschaltgruppe möglich. Zudem zeichnen sich diese Getriebe im Vergleich zu manuellen Schaltgetrieben durch einen hohen Bedienungskomfort aus, und sind im Vergleich zu Automatgetrieben besonders wirtschaftlich in den Herstellungs- und Betriebskosten.

Bauartbedingt unterliegen herkömmliche Mehrgruppen-Schaltgetriebe, wie alle nicht unter Last schaltenden manuellen oder automatisierten Schaltgetriebe, einer Zugkraftunterbrechung beim Gangwechsel, da stets der Kraftfluss vom Antriebsmotor durch Öffnen einer Kupplung unterbrochen wird, um den eingelegten Gang lastfrei auszulegen, in einer Neutralstellung Getriebe und Antriebsmotor auf eine Anschlussdrehzahl zu synchronisieren und den Zielgang einzulegen. Dadurch entstehen Einschränkungen bezüglich der Fahrleistung aufgrund eines Geschwindigkeitsverlustes sowie gegebenenfalls ein erhöhter Kraftstoffverbrauch. Während sich die Zugkraftunterbrechungen bei Personenkraftwagen durch Einbußen bei der Fahrdynamik in der Regel eher nur störend auswirken, beispielsweise bei einer sportlich orientierten Fahrweise, kann sich bei schweren Nutzfahrzeugen an Steigungen die Fahrgeschwindigkeit derart verzögern, dass ein Hochschalten unmöglich wird und es zu unerwünschten Rückschaltvorgängen, Kriechfahrten oder sogar zu zusätzlichen Anfahrvorgängen kommt.

Daher sind bereits Lösungen vorgeschlagen worden, die diese Zugkraftunterbrechungen reduzieren oder ganz vermeiden. Aus der DE 10 2006 024 370 A1 der Anmelderin ist ein solches automatisiertes Mehrgruppengetriebe mit einer Splittergruppe als Eingangsgetriebe, einem Hauptgetriebe und einer Bereichsgruppe als Ausgangs- oder Nachschaltgetriebe bekannt. Die Bauweise des bekannten Mehrgruppengetriebes mit dem Eingangsgetriebe und dem Hauptgetriebe ermöglicht die Schaltung eines Direktgangs als ein Zwischengang während eines Gangwechsels. Dazu wird temporär eine direkte Verbindung einer Eingangswelle des Eingangsgetriebes mit einer Hauptwelle des Hauptgetriebes mittels einer Lastschaltkupplung hergestellt. Dadurch werden das Hauptgetriebe und die Splittergruppe lastfrei, so dass der eingelegte Gang ausgelegt, das Getriebe synchronisiert und der Zielgang eingelegt werden kann, während die Anfahrkupplung eingekuppelt bleibt. Die Lastschaltkupplung überträgt dabei ein Motormoment auf den Getriebeausgang, wobei ein freiwerdendes dynamisches Drehmoment bei einer Drehzahlabsenkung zwischen Ursprungsgang und Zielgang genutzt wird, um den Zugkrafteinbruch weitgehend zu kompensieren. Die Lastschaltkupplung kann gemäß der DE 10 2006 024 370 A1 zwischen dem Eingangsgetriebe und dem Hauptgetriebe oder zwischen der Anfahrkupplung und dem Eingangsgetriebe angeordnet sein. Die Übersetzung des Zwischenganges ist somit durch die Direktverbindung der Eingangswelle mit der Hauptwelle als Direktgang festgelegt.

Ein weiteres Mehrgruppengetriebe ist aus der DE 10 2005 046 894 A1 der Anmelderin bekannt. Dieses Getriebe umfasst ein Hauptgetriebe und eine nachgeschaltete Bereichsgruppe. Ein Antriebsmotor ist über eine Anfahr- oder Motorkupplung mit dem motorseitigen Ende einer Getriebeeingangswelle verbindbar. Die Getriebeeingangswelle ist wiederum mit einer Abtriebswelle des Getriebes über eine Lastschaltkupplung, die innerhalb der Bereichsgruppe angeordnet ist, wirkverbindbar. Dabei ist das andere Ende der Getriebeeingangswelle mit einer Eingangsseite der Lastschaltkupplung verbunden, und eine Ausgangswelle des Hauptgetriebes ist mit einer Ausgangsseite der Lastschaltkupplung gekoppelt. Die Bereichsgruppe ist in Planetenbauweise ausgebildet, wobei die Abtriebswelle mit einem Planetenträger verbunden ist und die Ausgangsseite der Lastschaltkupplung über ein Sonnenrad sowie einen von dem Planetenträger getragenen Planetenradsatz mit der Abtriebswelle gekoppelt ist. Dadurch kann bei einem Schaltvorgang des Hauptgetriebes eine Zugkraftunterbrechung vermieden werden. Um auch bei einer Bereichsschaltung der Bereichsgruppe eine Zugkraftunterbrechung zu vermeiden, kann die Ausgangsseite der Lastschaltkupplung auch direkt mit dem Planetenträger und damit mit der Abtriebswelle verbunden sein. Dadurch sind auch Schaltvorgänge, die eine Bereichsschaltung beinhalten, zugkraftunterstützt.

Aus der DE 197 41 440 A1 ist ein Wechselgetriebe bekannt, bei dem ein Eingruppen-Stufengetriebe in Vorgelegebauweise zur Ermöglichung eines Automatikmodus und zur Vermeidung einer vollständigen Lastunterbrechung bei Gangwechseln mit einem Umlaufgetriebe, vorzugsweise einem Planetengetriebe, kombiniert ist. Auf einer Antriebswelle ist eingangs ein Festrad angeordnet, dass mit einem Festrad einer Vorgelegewelle kämmt und diese somit permanent antreibt. Weiterhin befinden sich die Losräder der vorgesehenen Gangstufen des Stufengetriebes auf der Vorgelegewelle und kämmen mit zugeordneten Festrädern auf einer Abtriebswelle.

Das Planetengetriebe ist im Kraftfluss parallel zwischen der Antriebswelle und der Abtriebswelle zwischengeschaltet. Dabei ist das Sonnenrad mit dem getriebeseitigen Ende der Antriebswelle verbunden. Das Hohlrad ist über eine erste Arretiervorrichtung mit einem Getriebegehäuse und über eine Reibkupplung mit der Abtriebswelle koppelbar, wobei die Eingangsseite der Reibkupplung mit dem Hohlrad verbunden ist und die Ausgangsseite der Kupplung mit der Abtriebswelle verbunden ist. Der Planetenträger ist über eine zweite Arretiervorrichtung wechselseitig mit dem Getriebegehäuse und der Abtriebswelle koppelbar.

Das Planetengetriebe erfüllt in diesem bekannten Getriebe mehrere Funktionen. Zum einen dient es zur Realisierung wenigstens einer Gangstufe und eines Rückwärtsganges im normalen Fahrbetrieb. Insbesondere ermöglicht es durch eine direkte Kopplung der Antriebswelle mit der Abtriebswelle, wobei die Planetengetriebekomponenten miteinander verblockt sind, die Schaltung eines Direktganges. Zum anderen ersetzt es ein herkömmliches Anfahrelement, gegebenenfalls mit einer zusätzlichen Haltefunktion an Steigungen, und wird zur Durchführung der Schaltvorgänge angesteuert. Bei einem Gangwechsel wird, je nach Schaltstellung der Planetengetrieberäder, die Reibkupplung zur genauen Einstellung eines auf die Abtriebswelle übertragenen Drehmomentes dosiert im Schlupf angesteuert, so dass die für den Gangwechsel zu schaltenden Losräder auf der Vorgelegewelle lastfrei schaltbar werden.

Als Nachteilig wird beurteilt, dass die Zugkraft bei einem Schaltvorgang des bekannten Getriebes zwar nicht völlig einbricht, aber das zur Abtriebswelle übertragene Drehmoment dennoch absinkt. Zudem kann die eine Reibkupplung, da sie sowohl als Anfahrelement als auch als Lastschaltelement fungiert, insbesondere bei häufigen Anfahr- und Schaltvorgängen, wie sie bei schweren Fahrzeugen mit Mehrgruppengetrieben üblicherweise vorkommen, hohen Belastungen ausgesetzt sein, die eine entsprechend aufwendige Dimensionierung und Kühlung erfordern. Da einzelne Fahrgänge über das Planetengetriebe realisiert sind, stellt das Getriebe eine Kombination von Schaltgetriebe und Automatgetriebe dar, wodurch der Übertragungswirkungsgrad des Antriebsmomentes gegenüber einem automatisierten Schaltgetriebe eher niedriger ist.

Vor diesem Hintergrund liegt der Erfindung die Aufgabe zugrunde, ein Mehrgruppengetriebe und ein Verfahren zu dessen Betrieb anzugeben, die weitgehend zugkraftunterbrechungsfreie Gangwechsel mit einem variabel wählbaren Zwischengang ermöglichen sowie einen effektiven und verschleißarmen Betrieb gewährleisten.

Die Lösung dieser Aufgabe ergibt sich aus den Merkmalen der unabhängigen Ansprüche, während vorteilhafte Ausgestaltungen und Weiterbildungen der Erfindung den Unteransprüchen entnehmbar sind.

Der Erfindung liegt die Erkenntnis zugrunde, dass bei einem Mehrgruppengetriebe, mit einem eigens dafür vorgesehenen Planetengetriebe, bei einem Schaltvorgang verschiedene übersetzte Zwischengänge wählbar sind, die einen besonders effektiven und komfortablen sowie weitgehend zugkraftunterbrechungsfreien Betrieb, insbesondere damit ausgestatteter schwerer Nutzfahrzeuge, ermöglichen, ohne auf den vergleichsweise hohen Wirkungsgrad und die feine Gangabstufung eines automatisierten Schaltgetriebes zu verzichten.

Demnach geht die Erfindung zunächst aus von einem Mehrgruppengetriebe eines Kraftfahrzeuges mit wenigstens zwei in einem Antriebsstrang angeordneten Getriebegruppen, bei dem Mittel zum Schalten eines Zwischenganges zur Verringerung oder Vermeidung von Zugkraftunterbrechungen bei Gangwechseln vorgesehen sind. Zur Lösung der gestellten Aufgabe sieht die Erfindung zudem vor, dass zum Schalten eines Zwischenganges zwischen einer ersten Getriebegruppe und einer zweiten Getriebegruppe ein Planetengetriebe angeordnet ist, wobei über das Planetengetriebe eine Getriebeeingangswelle mit einer Getriebehauptwelle wirkverbindbar ist.

Unter einem Gangwechsel wird hier ein Schaltvorgang verstanden, bei dem ein Ursprungsgang ausgelegt und ein Zielgang eingelegt wird, wobei auch der Spezialfall eingeschlossen ist, dass der Zielgang dem Ursprungsgang entspricht, also keine Übersetzungsänderung erfolgt.

Weiterhin geht die Erfindung aus von einem Verfahren zum Betrieb eines Mehrgruppengetriebes eines Kraftfahrzeuges mit wenigstens zwei in einem Antriebsstrang angeordneten Getriebegruppen, bei dem bei einem Gangwechsel zur Verringerung oder Vermeidung von Zugkraftunterbrechungen ein Zwischengang geschaltet wird. Die gestellte Aufgabe bezüglich des Verfahrens wird dadurch gelöst, dass zum Schalten eines Zwischenganges bei einem Gangwechsel mit Hilfe eines über zugehörige Kupplungen zuschaltbaren Planetengetriebes eine Wirkverbindung zwischen einer Getriebeeingangswelle und einer Getriebehauptwelle hergestellt wird, so dass wenigstens eine Hauptgruppe des Getriebes bei zumindest teilweise geschlossenem, zwischen einem Antriebsmotor und der Getriebeeingangswelle angeordneten, Anfahrelement lastfrei wird, in der Folge ein eingelegter Ursprungsgang ausgelegt wird, die Drehzahl des Antriebsmotors im Schlupfbetrieb wenigstens einer der Kupplungen des Planetengetriebes auf eine Anschlussdrehzahl eines Zielganges synchronisiert wird und bei Erreichen der Anschlussdrehzahl ein Zielgang eingelegt und das Planetengetriebe wieder deaktiviert wird.

Die erfindungsgemäße Anordnung ist besonders vorteilhaft bei einem Mehrgruppengetriebe für Nutzfahrzeuge anwendbar, bei dem drei Getriebegruppen vorgesehen sind, wobei eine vorgeschaltete, der Getriebeeingangswelle zugeordnete zweigängige Splittergruppe und eine zentrale, der Getriebehauptwelle zugeordnete mehrgängige Hauptgruppe als Vorgelegewellengetriebe ausgebildet sind und eine nachgeschaltete Bereichsgruppe als ein Planetengetriebe ausgebildet ist.

Die Getriebehauptwelle durchsetzt als Zentralwelle das Getriebe und ist direkt oder indirekt mit einer Abtriebswelle verbunden, über die das übertragene Antriebsmoment zu den angetriebenen Fahrzeugrädern fließt. Zwischen der Getriebeeingangswelle und der Getriebehauptwelle ist das Planetengetriebe zum Schalten des Zwischenganges erfindungsgemäß eingefügt.

Dies kann vorteilhaft dadurch realisiert sein, dass antriebsseitig das Sonnenrad des Planetengetriebes mit der Getriebeeingangswelle verbunden ist, und dass abtriebsseitig der Planetenradträger sowie das Hohlrad über je eine zugehörige Kupplung mit der Getriebehauptwelle verbindbar sind. Dabei sind die Kupplungseingangsseiten mit dem Planetenträger bzw. dem Hohlrad verbunden und die Kupplungsausgangsseiten koaxial hintereinander mit der Getriebehauptwelle verbunden.

Weiterhin kann das Hohlrad über eine Bremseinrichtung mit einem Gehäuse, insbesondere einem Getriebegehäuse, koppelbar sein. Da das Planetengetriebe vorzugsweise nur zur Schaltung des Zwischenganges beim Gangwechsel eingesetzt wird und es insbesondere nicht ein Anfahrelement ersetzt, kann es relativ kostengünstig und kompakt in das Mehrgruppengetriebe implementiert werden.

Das Planetengetriebe kann anstelle des herkömmlichen Minus-Planetenradsatzes auch einen Plus-Planetenradsatz mit inneren und äußeren Planetenrädern aufweisen, wobei die inneren Planetenräder einerseits mit einem Sonnenrad und andererseits mit den äußeren Planetenrädern kämmen, und die äußeren Planetenräder einerseits mit einem Hohlrad und andererseits mit den inneren Planetenrädern kämmen. In diesem Fall wären die Funktionen von Hohlrad und Planetenradträger vertauschbar, d.h. der Kraftfluss könnte über das Hohlrad zur Getriebehauptwelle verzweigen und der Planetenradträger könnte abgebremst werden.

Im normalen Fahrbetrieb bei eingelegtem Gang sind die Kupplungen des Planetengetriebes geöffnet, so dass das Planetengetriebe deaktiviert ist und der Momentenfluss vom Antriebsmotor über ein übliches Anfahrelement, die Getriebeeingangswelle und die Vorgelegewellen, entsprechend der geschalteten Gangräder der Getriebegruppen, sich am Planetengetriebe vorbei zur Getriebehauptwelle hin verzweigt und von dort zum Abtrieb übertragen wird.

Bei einem Gangwechsel wird der Zwischengang zugeschaltet, indem bei einem Planetengetriebe mit einem herkömmlichen Minus-Planetenradsatz zumindest die Kupplung des Planetenradträgers teilweise eingerückt wird. Dadurch wird der Kraftfluss unter Auslassung des Hauptgetriebes von der Getriebeeingangswelle zur Getriebehauptwelle gelenkt, so dass eine Wirkverbindung zwischen dem Antrieb und dem Abtrieb über das Planetengetriebe entsteht sowie das Hauptgetriebe gleichzeitig lastfrei und damit schaltbar wird.

Der eingelegte Ursprungsgang wird anschließend ausgelegt, wobei das Anfahrelement vollständig geschlossen bleiben kann, so dass die Zugkraft erhalten bleibt. Die aktive Kupplung des Planetengetriebes stützt dazu im Schlupfbetrieb während der Zughoch- oder Zugrückschaltung das Motormoment des Antriebsmotors an der Getriebehauptwelle und damit am Abtrieb ab. Dabei wird die Motordrehzahl dem angeforderten Zielgang angepasst, also beispielsweise bei einem Hochschaltvorgang abgesenkt, und bei erreichter Synchrondrehzahl der Zielgang eingelegt. Abschließend wird das Planetengetriebe wieder von der Getriebehauptwelle getrennt. Grundsätzlich sind dabei auch zugkraftunterstützte Gangwechsel mit Gangsprüngen über zwei oder mehr Gangstufen möglich.

Die Momentabstützung am Abtrieb über den Zwischengang vermeidet weitgehend einen Geschwindigkeitsverlust des Fahrzeugs während eines Schaltvorgangs. Da bei einer Schaltanforderung einer Getriebesteuerung das Hauptgetriebe und Splittergetriebe über das Planetengetriebe unmittelbar lastfrei gestellt sowie die Synchronisierung auf den Zielgang eingeleitet werden kann und insbesondere nicht das Auskuppeln des Anfahrelementes abgewartet werden muss, lässt sich zudem die erforderliche Schaltdauer für den Gangwechsel reduzieren. Weiterhin lassen sich Schwingungen und Schaltschläge im Antriebsstrang weitgehend reduzieren, da der Antriebsstrang während des Gangwechsels durch den Zwischengang stets vorgespannt bleibt. Zudem kann eine Getriebebremse eingespart werden, da über den Zwischengang die zu synchronisierenden rotierenden Massen beim Gangwechsel abbremsbar sind, was sich zusätzlich kostengünstig und bauraum- sowie gewichtsparend auswi rkt.

Der Zwischengang kann vorteilhaft über entsprechende Schaltstellungen des Planetengetriebes wahlweise als ein Direktgang oder als ein übersetzter Gang geschaltet werden. Über die beiden vorzugsweise als Reibkupplungen ausgebildeten Kupplungen kann entweder der Planetenradträger oder der Planetenradträger mit dem Hohlrad zusammen ein an der Getriebeeingangswelle anliegendes Antriebsmoment des Antriebsmotors auf die Getriebehauptwelle übertragen. Dazu kann das Hohlrad wahlweise an einem Gehäuse abgebremst bzw. freigegeben und mittels seiner zugehörigen Kupplung mit der Getriebehauptwelle gekoppelt werden. Der Planetenradträger ist über die ihm zugehörige Kupplung mit der Getriebehauptwelle koppelbar, wobei die Kupplung im Schlupf ansteuerbar ist.

Insbesondere kann vorgesehen sein, dass der Zwischengang als ein Direktgang geschaltet wird, wobei der Planetenradträger des Planetengetriebes über die erste zugehörige Kupplung und das Hohlrad des Planetengetriebes über die zweite zugehörige Kupplung mit der Getriebehauptwelle gekoppelt sind. Ist die Hohlradkupplung geschlossen und überträgt der Planetenradträger das Antriebsmoment über die zumindest teilweise eingerückte Planetenträgerkupplung an den Abtrieb, so sind die Planetengetrieberäder blockiert, d.h. zwischen dem Planetenradträger und dem Hohlrad sind keine Relativbewegungen möglich. Folglich läuft das gesamte Planetengetriebe mit der Drehzahl der Getriebeeingangswelle, also - bei vollständig eingerücktem Anfahrelement - mit der Motordrehzahl um, und überträgt das anliegende Moment in der Direktübersetzung i = 1 auf die Getriebehauptwelle.

Besonders vorteilhaft ist es, dass der Zwischengang auch als ein übersetzter Gang schaltbar ist, wobei der Planetenradträger über die ihm zugehörige Kupplung mit der Getriebehauptwelle gekoppelt ist und das Hohlrad des Planetengetriebes von der Getriebehauptwelle entkoppelt und über eine Bremseinrichtung mit einem Gehäuse gekoppelt ist. Die Planetenradträgerkupplung kann hierbei vorzugsweise im Schlupf betrieben werden, wobei der Schließgrad vorteilhaft mittels einer Kupplungssteuerung regelbar sein kann. Freilaufend wird das Hohlrad, sofern gewünscht, durch Öffnen der zugehörigen Kupplung und Lösen der Bremse.

Durch den variabel wählbaren Zwischengang wird ein besonders hoher Schaltkomfort erreicht. Weiterhin wird auch eine flexible Anpassung der Wahl des Zwischengangs an verschiedene Fahrsituationen, beispielsweise in Abhängigkeit der Fahrbahnsteigung, des aktuellen Gesamtgewichts und/oder der Fahrgeschwindigkeit, ermöglicht.

In der Anordnung mit einer nachgeschalteten Bereichsgruppe in Planetenbauweise ist ein Umschalten des Bereichsgetriebes zwischen zwei Gangbereichen mittels einer Schalteinrichtung, die das Hohlrad entweder mit einem Gehäuse (untere Gangstufe) oder mit dem Planetenradträger (obere Gangstufe) koppelt, nicht von vornherein zugkraftunterstützt. Um auch die zugkraftunterstützte Schaltung der Bereichsgruppe zu ermöglichen, kann beispielsweise die Getriebehauptwelle durch das Bereichsgetriebe hindurchgeführt und mit der Abtriebswelle direkt verbunden werden, so dass der Zwischengang als Direktgang des Gesamtgetriebes, unabhängig von der Schaltstellung oder einem Schaltstellungswechsel der Bereichsgruppe, schaltbar ist. Eine lastumschaltbar ausgebildete Bereichsgruppe ist ebenfalls möglich. Zur Einbeziehung einer Nachschaltgruppe in die Zugkraftunterstützung des Zwischengangs sei an dieser Stelle auch auf die eingangs erwähnte DE 10 2005 046 894 A1 verwiesen.

Zur Verdeutlichung der Erfindung ist der Beschreibung eine Zeichnung mit einem Ausführungsbeispiel beigefügt. In dieser zeigt
- Fig. 1: ein Getriebeschema eines Mehrgruppengetriebes eines Kraft-fahrzeuges mit einem Planetengetriebe zum Schalten eines Zwischengangs,
- Fig. 2: einen Momentenfluss des Getriebes gemäß Fig. 1 bei geschal-tetem direkten Zwischengang, und
- Fig. 3: einen Momentenfluss des Getriebes gemäß Fig. 1 bei geschal-tetem übersetzten Zwischengang.

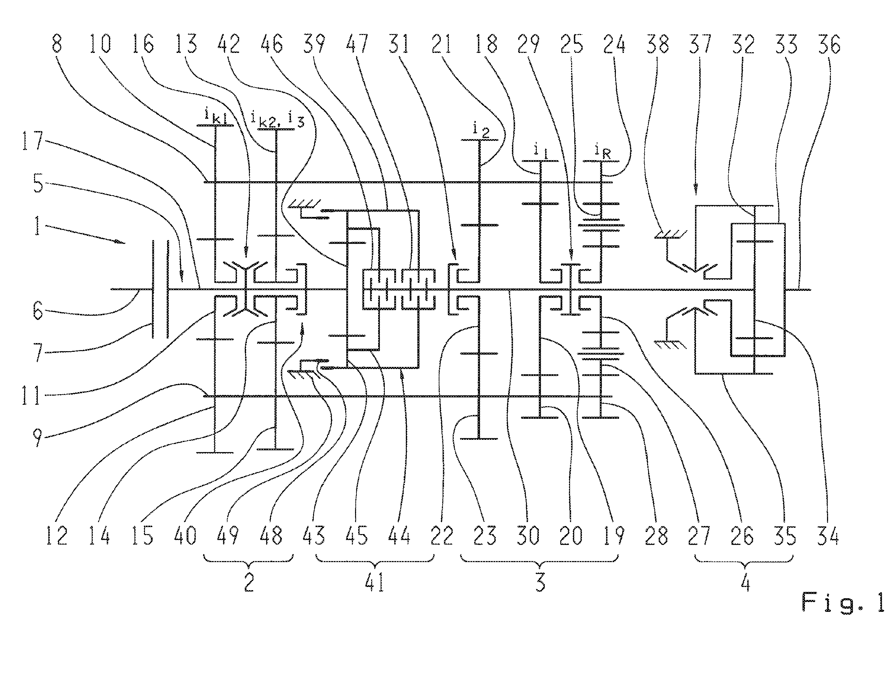

Die Fig. 1 zeigt demnach ein als Zwei-Vorgelegewellen-Getriebe 1 ausgebildetes automatisiertes Mehrgruppengetriebe mit zwei parallelen, drehbar gelagerten Vorgelegewellen 8, 9 und drei hintereinander angeordneten Getriebegruppen 2, 3, 4, wie es beispielsweise im Antriebsstrang eines Lastkraftwagens vorgesehen sein kann. Ein derartiges Getriebe ist an sich, d.h. ohne Zwischengangschaltung, beispielsweise aus der Baureihe ZF-AS Tronic, und mit einer Zwischengangschaltung aus der eingangs erwähnten DE 10 2006 024 370 A1 der Anmelderin bekannt.

Zwischen einer Antriebswelle 6 eines nicht näher dargestellten Antriebsmotors und einem Getriebeeingang 5 ist ein herkömmliches Anfahrelement 7 in Form einer Kupplung angeordnet. Die erste, am Getriebeeingang 5 angeordnete Getriebegruppe 2 ist als ein zweigängiges Splittergetriebe ausgebildet. Die zweite Getriebegruppe 3 bildet ein dreigängiges Hauptgetriebe. Als dritte Getriebegruppe 4 ist ein nachgeschaltetes zweigängiges Bereichsgetriebe angeordnet.

Das Splittergetriebe 2 weist zwei Gangkonstanten iₖ₁, iₖ₂ auf, die jeweils ein auf der ersten Vorgelegewelle 8 und auf der zweiten Vorgelegewelle 9 drehfest angeordnetes Festrad 10, 12, bzw. 13, 15 umfassen, die mit einem Losrad 11 bzw. 14 kämmen. Zur Schaltung der Gangkonstanten iₖ₁, iₖ₂ ist eine Schalteinrichtung 16, vorteilhaft mit Synchronisierung, angeordnet, über welche die Losräder 11 bzw. 14 wahlweise drehfest mit einer Getriebeeingangswelle 17 verbindbar sind.

Das Hauptgetriebe 3 weist drei Vorwärtsgänge i₁, i₂ und i₃ sowie einen Rückwärtsgang i_{R} auf. Der 1. Gang und der 2. Gang umfassen jeweils zwei Festräder 18, 20 bzw. 21, 23 und ein Losrad 19 bzw. 22. Der 3. Gang ist gemeinsam mit der zweiten Gangkonstante iₖ₂ des Splittergetriebes 2 realisiert. Der Rückwärts-Gang umfasst zwei Festräder 24, 28, ein Losrad 26 und zwei drehbar gelagerte Zwischenräder 25, 27, die einerseits mit dem jeweils zugehörigen Festrad 24 bzw. 28 und andererseits mit dem Losrad 26 kämmen.

Zur Schaltung des 1. Gangs und des Rückwärts-Gangs ist eine Schalteinrichtung 29 mit Schaltklauen vorgesehen, über welche die zugehörigen Losräder 19 bzw. 26 wahlweise drehfest mit einer Getriebehauptwelle 30 verbindbar sind. Zur Schaltung des 2. Gangs ist eine Klauen-Schalteinrichtung 31 angeordnet, über die das zugehörige Losrad 22 drehfest mit der Getriebehauptwelle 30 koppelbar ist. Eine weitere Klauen-Schalteinrichtung 40 ist zur Schaltung des 3. Gangs am Splittergetriebe 2 angeordnet. Diese Schalteinrichtung 40 verbindet wahlweise das zugehörige Losrad 14 drehfest mit der Getriebeeingangswelle 17.

Das nachgeschaltete Bereichsgetriebe 4 ist als ein Planetengetriebe ausgebildet. Darin ist ein Planetenradsatz 32 von einem Planetenradträger 33 geführt. Die Planetenräder kämmen einerseits mit einem zentralen Sonnenrad 34 und andererseits mit einem äußeren Hohlrad 35. Das Sonnenrad 34 ist mit der Getriebehauptwelle 30 verbunden. Der Planetenradträger 33 ist wiederum mit einer Getriebeabtriebswelle 36 verbunden. Zur Schaltung des Bereichsgetriebes 4 ist eine Schalteinrichtung 37, vorteilhaft mit Synchronisierung, angeordnet. Diese Schalteinrichtung 37 verbindet in einer ersten Schaltstellung das Hohlrad 35 mit einem Gehäuse 38 oder verblockt in einer zweiten Schaltstellung das Hohlrad 35 mit dem Planetenradträger 33.

Aus der Kombination der Getriebegruppen 2, 3 und 4 des dargestellten Getriebeschemas ergeben sich insgesamt 2 x 3 x 2 = 12 Gänge. Der Kraftfluss des Getriebes 1 verzweigt sich nach einer Schaltfolge, bei der, beginnend mit dem 1. Gang im Hauptgetriebe 3, zunächst alternierend das Splittergetriebe 2 und das Hauptgetriebe 3 durchgeschaltet werden, so dass nacheinander 2 x 3 = 6 Gänge eines unteren Gangbereichs "1. Gang bis 6. Gang" geschaltet werden. Ist der 6. Gang erreicht, schaltet das Bereichsgetriebe 4 um, und es werden erneut das Hauptgetriebe 3 und das Splittergetriebe 2 alternierend durchgeschaltet, so dass wiederum 2 x 3 = 6 Gänge, nun aber in einem oberer Gangbereich "7. Gang bis 12. Gang", geschaltet werden. Das vorgeschaltete Splittergetriebe 2 schaltet auch die Rückwärts-Gang-Übersetzung i_{R} alternierend, so dass zudem zwei Rückwärtsgänge zur Verfügung stehen.

Zwischen der Getriebeeingangswelle 17 und der Getriebehauptwelle 30 ist erfindungsgemäß zum Schalten eines Zwischenganges ein Planetengetriebe 41 angeordnet. Als ein Planetengetriebeeingang ist die Getriebeeingangswelle 17 mit einem Sonnenrad 42 verbunden. Ein Minus-Planetenradsatz 43 mit vorzugsweise drei oder mehr Planetenrädern kämmt einerseits mit dem Sonnenrad 42 und andererseits mit einem Hohlrad 44. Der Planetenradsatz 43 ist auf einem Planetenradträger 45 gelagert.

An dem Planetenradträger 45 ist eine als Reibungskupplung ausgebildete erste Kupplung 46 angeordnet, wobei deren Eingangsseite mit dem Planetenradträger 45 und deren Ausgangsseite mit der Getriebehauptwelle 30 verbunden ist. Am Hohlrad 44 ist eine weitere, vorteilhaft als Reibungskupplung ausgebildete zweite Kupplung 47 angeordnet, deren Eingangsseite mit einer abtriebsseitigen axialen Verlängerung 39 des Hohlrades 44 und deren Ausgangsseite wiederum mit der Getriebehauptwelle 30 verbunden ist, so dass die beiden Reibkupplungen 46, 47 koaxial hintereinander angeordnet sind. Über die Reibkupplungen 46, 47 ist somit wahlweise der Planetenradträger 45 und/oder das Hohlrad 44 mit der Getriebehauptwelle 30 koppelbar.

Das Hohlrad 44 ist weiterhin mittels einer Bremseinrichtung 48 an einem Gehäuse 49 brems- und arretierbar. Die Bremseinrichtung 48 ist im gezeigten Beispiel durch einen Reibpartner an einer antriebseitigen axialen Verlängerung des Hohlrades 44, der mit einem Reibpartner an dem Gehäuse 49 korrespondiert, realisiert. Das Gehäuse 49 zur Arretierung des Hohlrades 44 des Zwischengang-Planetengetriebes 41 und das Gehäuse 38 zur Arretierung des Hohlrades 35 des nachgeschalteten Bereichs-Planetengetriebes 4 können Teile eines gemeinsamen Getriebegehäuses des Getriebes 1 sein.

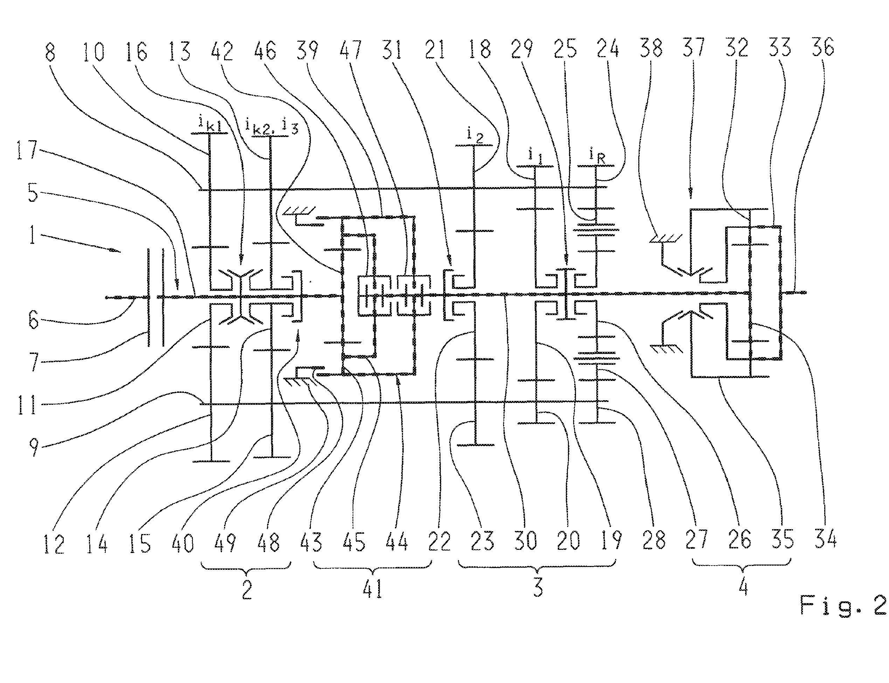

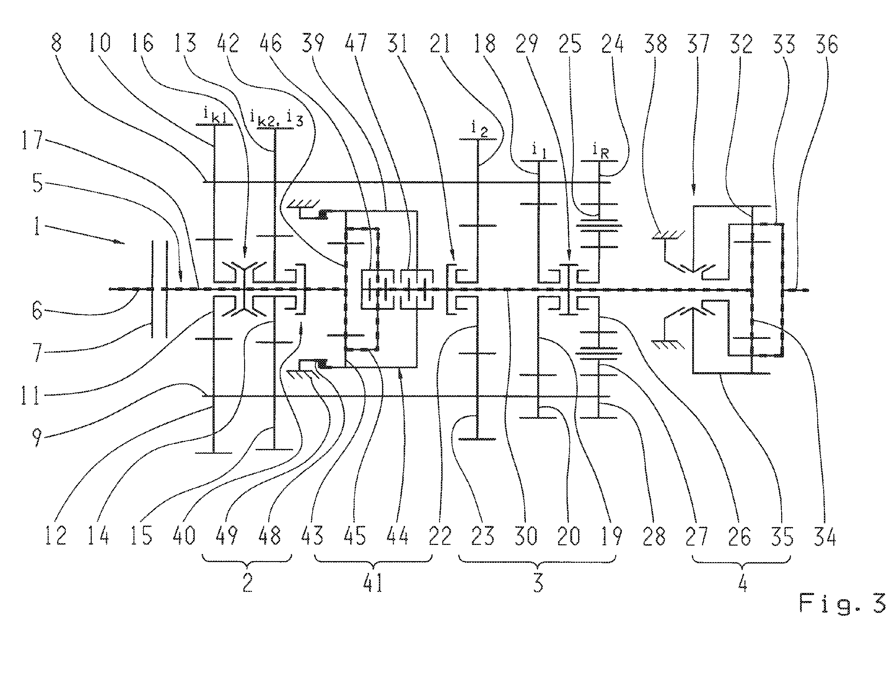

Die Funktion der Zwischengangschaltung wird anhand von Fig. 2 und Fig. 3 erläutert, in denen bei einem Getriebeschema gemäß Fig. 1 jeweils ein Momentenfluss - gestrichelt hervorgehoben - dargestellt ist.

Bei einer Schaltanforderung im Fahrbetrieb bleibt das Anfahrelement 7 vollständig geschlossen. Dabei wird der Zwischengang zugeschaltet. Dies erfolgt, in dem - im Falle des beschriebenen Minus-Planetenradsatzes 43 - zumindest die Kupplung 46 des Planetenradträgers 45 in Schließrichtung angesteuert wird, so dass im Schlupfbetrieb das Motormoment des Antriebsmotors von der Getriebeeingangswelle 17 auf die Getriebehauptwelle 30 übertragen wird. Da die Getriebehauptwelle 30 über die Bereichsgruppe 4 mit der Getriebeabtriebswelle 36 verbunden ist, stützt sich das Motormoment am Abtrieb, also über die angetriebenen Fahrzeugräder, an der Fahrbahn ab. Folglich werden das Hauptgetriebe 3 und das Splittergetriebe 2 trotz geschlossenem Anfahrelement 7 lastfrei und somit schaltbar.

Die Zwischengangschaltung erfolgt im Beispiel von Fig. 2, in dem sowohl die Kupplung 46 des Planetenradträgers 45 als auch die Kupplung 47 des Hohlrades 44 in Schließrichtung angesteuert werden, so dass sowohl der Planetenradträger 45 als auch das Hohlrad 44 ein Drehmoment übertragen und sich das gesamte Planetengetriebe 41 mit der Getriebeeingangsdrehzahl dreht. Der Zwischengang wird somit als Direktgang geschaltet. Das Splittergetriebe 2 und das Hauptgetriebe 3 sind am Zwischengang nicht beteiligt. Der Momentenfluss läuft von der Antriebswelle 6 über das Anfahrelement 7, die Getriebeeingangswelle 17, über das Planetengetriebe 41 zur Getriebehauptwelle 30. Das nachgeschaltete Bereichsgetriebe 4 überträgt das Abtriebsmoment über dessen Planetenträger 32 an die Getriebeabtriebswelle 36, wobei die Schaltstellung der zugehörigen Schalteinrichtung 37 zu berücksichtigen ist.

In dem in Fig. 3 gezeigten Beispiel ist die Hohlradkupplung 47 hingegen vollständig geöffnet und das Hohlrad 44 mit der Bremseinrichtung 48 am Gehäuse 49 arretiert, also festgehalten. Dementsprechend rollen die Planetenräder, angetrieben durch das mit der Getriebeeingangswelle 17 verbundene Sonnenrad 42, am Hohlrad 44 ab, wodurch der über die schleifende Kupplung 46 mit der Getriebehauptwelle 30 verbundene Planetenradträger 45 gleichsinnig in der Drehrichtung der Getriebeeingangswelle 17 bewegt wird und ein Drehmoment mit einer positiven Übersetzung an den Abtrieb übertragen wird.

Durch die Momentenabstützung des Zwischenganges bleibt die Zugkraft während des Auslegens des Ursprungsganges erhalten. Die aktive Planetengetriebekupplung 46 wird während des Schaltvorgangs im Schlupfbetrieb angesteuert, so dass sie in der Folge das Drehmoment des Antriebsmotors über die Wirkverbindung mit der Getriebeabtriebswelle 36 zur Fahrbahn abstützt. Die Motordrehzahl wird während der Momentenabstützung auf eine Synchrondrehzahl eines Zielgangs abgesenkt. Das bei der Drehzahlabsenkung freiwerdende Drehmoment wird somit zur Kompensation des Zugkrafteinbruchs während der Neutralstellung eingesetzt. Sobald die Synchrondrehzahl erreicht ist, wird der Zielgang im Hauptgetriebe 3 eingelegt und gegebenenfalls die Splittergruppe 2 über eine zwischenzeitliche Neutralstellung in die neue oder bisherige, der Schaltfolge bzw. dem angewählten Gangsprung entsprechende, Gangkonstante geschaltet. Anschließend wird die Planetengetriebekupplung 46 und, im Falle dass die Direktübersetzung geschaltet wurde, die Hohlradkupplung 47 wieder geöffnet, wodurch das Planetengetriebe 41 im Kraftfluss vom Antriebsstrang entkoppelt wird. Der zugkraftunterstützte Gangwechsel ist damit abgeschlossen.

### Bezugszeichenliste

- 1: Zwei-Vorgelegewellen-Getriebe
- 2: Splittergetriebe
- 3: Hauptgetriebe
- 4: Bereichsgetriebe
- 5: Getriebeeingang
- 6: Antriebswelle
- 7: Anfahrelement
- 8: Vorgelegewelle
- 9: Vorgelegewelle
- 10: Festrad
- 11: Losrad
- 12: Festrad
- 13: Festrad
- 14: Losrad
- 15: Festrad
- 16: Schalteinrichtung
- 17: Getriebeeingangswelle
- 18: Festrad
- 19: Losrad
- 20: Festrad
- 21: Festrad
- 22: Losrad
- 23: Festrad
- 24: Festrad
- 25: Zwischenrad
- 26: Losrad
- 27: Zwischenrad
- 28: Festrad
- 29: Schalteinrichtung
- 30: Getriebehauptwelle
- 31: Schalteinrichtung
- 32: Planetenradsatz
- 33: Planetenradträger
- 34: Sonnenrad
- 35: Hohlrad
- 36: Getriebeabtriebswelle
- 37: Schalteinrichtung
- 38: Gehäuse
- 39: Hohlradverlängerung
- 40: Schalteinrichtung
- 41: Zwischengang-Planetengetriebe
- 42: Sonnenrad
- 43: Planetenradsatz
- 44: Hohlrad
- 45: Planetenradträger
- 46: Planetenradträgerkupplung, erste Kupplung
- 47: Hohlradkupplung, zweite Kupplung
- 48: Bremseinrichtung
- 49: Gehäuse
- iₖ₁: Splittergetriebe-Gangkonstante
- iₖ₂: Splittergetriebe-Gangkonstante
- i₁: Hauptgetriebe-Gang
- i₂: Hauptgetriebe-Gang
- i₃: Hauptgetriebe-Gang
- i_{R}: Hauptgetriebe-Rückwärtsgang

## Patentansprüche

1. Mehrgruppengetriebe eines Kraftfahrzeuges mit wenigstens zwei in einem Antriebsstrang angeordneten Getriebegruppen (2, 3), bei dem Mittel zum Schalten eines Zwischenganges zur Verringerung oder Vermeidung von Zugkraftunterbrechungen bei Gangwechseln vorgesehen sind, **dadurch ge- kennzeichnet, dass** zum Schalten eines Zwischenganges zwischen einer ersten Getriebegruppe (2) und einer zweiten Getriebegruppe (3) ein Planetengetriebe (41) angeordnet ist, wobei über das Planetengetriebe (41) eine Getriebeeingangswelle (17) mit einer Getriebehauptwelle (30) wirkverbindbar ist.

2. Mehrgruppengetriebe nach Anspruch 1, **dadurch gekennzeichnet, dass** ein Sonnenrad (42) des Planetengetriebes (41) mit der Getriebeeingangswelle (17) verbunden ist, und dass ein Planetenradträger (45) über eine erste Kupplung (46) sowie ein Hohlrad (44) über eine zweite Kupplung (47) mit der Getriebehauptwelle (30) koppelbar sind.

3. Mehrgruppengetriebe nach Anspruch 1 oder 2, **dadurch gekennzeichnet, dass** das Hohlrad (44) über eine Bremseinrichtung (48) mit einem Gehäuse (49) koppelbar ist.

4. Mehrgruppengetriebe nach einem der Ansprüche 1 bis 3, **dadurch gekennzeichnet, dass** der Zwischengang über entsprechende Schaltstellungen des Planetengetriebes (41) wahlweise als ein Direktgang und als ein übersetzter Gang schaltbar ist.

5. Mehrgruppengetriebe nach einem der Ansprüche 1 bis 4, **dadurch gekennzeichnet, dass** das Planetengetriebe (41) einen Minus-Planetenradsatz (43) aufweist.

6. Mehrgruppengetriebe nach einem der Ansprüche 1 bis 4, **dadurch gekennzeichnet, dass** das Planetengetriebe einen radial zwischen einem Sonnenrad und einem Hohlrad gelagerten Plus-Planetenradsatz mit inneren und äußeren Planetenrädern aufweist, wobei die inneren Planetenräder einerseits mit dem Sonnenrad und andererseits mit den äußeren Planetenrädern kämmen, und die äußeren Planetenräder einerseits mit dem Hohlrad und andererseits mit den inneren Planetenrädern kämmen.

7. Mehrgruppengetriebe nach einem der Ansprüche 1 bis 6, **dadurch gekennzeichnet, dass** drei Getriebegruppen (2, 3, 4) vorgesehen sind, wobei eine vorgeschaltete, der Getriebeeingangswelle (17) zugeordnete zweigängige Splittergruppe (2) und eine zentrale, der Getriebehauptwelle (30) zugeordnete mehrgängige Hauptgruppe (3) als Vorgelegewellengetriebe ausgebildet sind, sowie eine nachgeschaltete Bereichsgruppe (4) als ein Planetengetriebe ausgebildet ist.

8. Verfahren zum Betrieb eines Mehrgruppengetriebes eines Kraftfahrzeuges, mit wenigstens zwei in einem Antriebsstrang angeordneten Getriebegruppen (2, 3), bei dem bei einem Gangwechsel, zur Verringerung oder Vermeidung von Zugkraftunterbrechungen, ein Zwischengang geschaltet wird, **dadurch gekennzeichnet, dass** zum Schalten eines Zwischenganges bei einem Gangwechsel mit Hilfe eines über zugehörige Kupplungen (46, 47) zuschaltbaren Planetengetriebes (41) eine Wirkverbindung zwischen einer Getriebeeingangswelle (17) und einer Getriebehauptwelle (30) hergestellt wird, so dass wenigstens eine Hauptgruppe (3) bei zumindest teilweise geschlossenem, zwischen einem Antriebsmotor und der Getriebeeingangswelle (17) angeordneten Anfahrelement (7) lastfrei wird, in der Folge ein eingelegter Ursprungsgang ausgelegt wird, die Drehzahl des Antriebsmotors im Schlupfbetrieb wenigstens einer der Kupplungen (46, 47) des Planetengetriebes (41) auf eine Anschlussdrehzahl eines Zielganges synchronisiert wird, und bei Erreichen der Anschlussdrehzahl ein Zielgang eingelegt sowie das Planetengetriebe (41) wieder deaktiviert wird.

9. Verfahren nach Anspruch 8, **dadurch gekennzeichnet, dass** der Zwischengang als ein Direktgang geschaltet wird, wobei ein Planetenradträger (45) des Planetengetriebes (41) über eine erste zugehörige Kupplung (46) und ein Hohlrad (44) des Planetengetriebes (41) über eine zweite zugehörige Kupplung (47) mit der Getriebehauptwelle gekoppelt sind.

10. Verfahren nach Anspruch 8, **dadurch gekennzeichnet , dass** der Zwischengang als ein übersetzter Gang geschaltet wird, wobei der Planetenradträger (45) über die ihm zugehörige Kupplung (46) mit der Getriebehauptwelle (30) gekoppelt ist, und das Hohlrad (44) des Planetengetriebes (41) von der Getriebehauptwelle (30) entkoppelt sowie über eine Bremseinrichtung (48) mit einem Gehäuse (49) gekoppelt ist.
